Europäisches Patentamt

European Patent Office

Office européen des brevets

(11) Publication number: **0 464 321 A1**

# EUROPEAN PATENT APPLICATION

(21) Application number: **91105719.8**

(22) Date of filing: **11.04.91**

(51) Int. Cl.⁵: **B01D 61/22**, //C12H1/06, C12G3/08,B01D37/04

(30) Priority: **26.06.90 IT 8496690**

(43) Date of publication of application:
**08.01.92 Bulletin 92/02**

(84) Designated Contracting States:
**AT BE CH DE DK ES FR GB GR IT LI LU NL SE**

(71) Applicant: **PERDOMINI SpA
Via Salvo d'Acquisto, 2
I-37036 San Martino Buon Albergo (VR)(IT)**

(72) Inventor: **de Mattia, Maurizio
Via Valganna 29
I-21100 Varese(IT)**

(74) Representative: **Petraz, Gilberto Luigi
GLP S.r.l. Piazzale Cavedalis 6/2
I-33100 Udine(IT)**

(54) Automatic system for controlling and optimising of ultrafiltration processes in foodstuffs and/or chemical and/or chemical-pharmaceutical industrial plants and ultrafiltration process utilising such a system.

㉗ The system according to the invention provides for the insertion, in an ultrafiltration plant, of probes suitable for detecting the istantaneous value of a plurality of variables, such as, e.g., temperature, turbidity, permeate quantity, flow speed, pressure, chlorine concentration, pH.

Said probes are connected to a microprocessor which analyzes and elaborates the istantaneous data by comparing them with corresponding threshold values which are pre-established for a given process phase, said threshold values being divided into three different levels, namely:
- normal operation;
- alarm in operation: operative risk;
- system shutdown.

According to the invention the microprocessor, which is on its turn connected to an electronic computer, is programmed in such a way as to analyze all the possible combination of values which may be operatively intersected, and to allow the plant to be held into operation even if some values would fall within the limit of operative risk, provided that the other correlated parameters would compensate this kind of "breaking".

Rank Xerox (UK) Business Services

The present invention relates to an automatic system for controlling and optimising of ultrafiltration processes in foodstuffs and/or chemical and/or chemical-pharmaceutical industrial plants.

More particularly, the present invention relates to an automatic system which is controlled by an electronic computer which allows to optimize the performances of automatic plants suitable for carrying out ultrafiltration processes of foodstuffs and/or chemical products and/or chemical-pharmaceutical products, in such a way as to assure a predetermined life of the membrane filtering elements and a wholly automised execution under pre-established parameters of said processes.

The present invention includes a particularly advantageous form of embodiment in the field of oenological industry.

Furthermore, the present invention relates to an ultrafiltration process utilising such a controlling and optimising system.

BACKGROUND ART

Ultrafiltration processes of foodstuffs and/or chemical products and/or chemical-pharmaceutical products are known in the art.

Such processes provide for the use of submicronic filtration systems which are based on the use of semi-permeable membranes constituted by seelective permeators which form the separation means between two chemical species.

Said selective permeators are generally constituted by polymeric thin films having a very high surface/thickness ratio, the separation between the chemical species taking place thanks to the selective transfer properties, i.e. the different transfer speeds of these films; the thrust force for activating and mantaining the process may be represented by a mechanically imparted pressure, or by a gradient of concentration or of electrical potential or of temperature.

The membrane ultrafiltration processes provide for several advantages in respect of the traditional solids/liquids separation systems, said advantages being for instance represented by:
- the products to be filtered need no chemical treatment prior to filtration;
- absence of filtration aids;
- possibility of fermenting the filtered products in absolute purity conditions;
- practically total elimination of manual labour;
- very low production costs.

However, the known membrane filtration processes, although they are carried out by means of automatic machines provided with instrumentation probes which are installed on-line and carry out a detection of only physical parameters, as temperatures and pressures, and which allow the system to be stopped by means of servo-mechanical devices once predetermined values of said parameters are reached, are nevertheless provided with several drawbacks and disadvantages which are due to the fact that they are not provided with suitable means for controlling the working state of the membranes.

In this context, it appears to be useful to remember that the management cost represented by the replacement of the membranes, which feature a great delicacy, constitutes in may cases a share of nearly 80% of the general management cost of an ultrafiltration plant.

In fact, the organic membranes which are used have a physiological life which is naturally set in seven years; due to uncontrolled failures of the filtration process, the longevity of these membranes may be sharply limited, up to few hours.

DESCRIPTION OF THE INVENTION

It is a main purpose of the present invention to provide a controlling and optimising system for an ultrafiltration process which would allow to mantain under control all the - chemical, physical, mechanical, fluids-dynamical, microbiological - parameters of this process, and which would therefore allow the optimal efficiency of the plant to be achieved, furthermore allowing the average life of the used membranes to be substantially extended (at least three years) and the management costs of the plant to be consequently reduced in a substantial way.

This is achieved by carrying out the features disclosed in the main claim.

The dependent claims describe particularly advantageous forms of embodiment of the invention.

A further purpose of the invention is that of providing an ultrafiltration process in which all the main parameters (chemical, physical, mechanical, fluids-dynamical, microbiological) are constantly held under predetermined thresholds, and which would therefore allow low-cost and organoleptically perfect final products to be obtained.

This is achieved by carrying out the features disclosed in claim 4.

The system according to the invention provides for the insertion, in an ultrafiltration plant, of probes suitable for detecting the istantaneous value of a plurality of variables, such ass, e.g., temperature, turbidity, permeate quantity, flow speed, pressure, chlorine concentration, pH.

Said probes are connected to a microprocessor which analyzes and elaborates the istantaneous data by comparing them with corresponding threshold values which are pre-established for a given process phase, said threshold values being divided into three different levels, namely:
- normal operation;

- alarm in operation: operative risk;
- system shutdown.

According to the invention the microprocessor, which is on its turn connected to an electronic computer, is programmed in such a way as to analyze all the possible combination of values which may be operatively intersected, and to allow the plant to be held into operation even if some values would fall within the limit of operative risk, provided that the other correlated parameters would compensate this kind of "breaking".

In other words, the system allows to the operator the highest peace during the process phases, and in the meantime it gives informations in respect of all the istantaneous conditions of the process, by updating in real time all the variations which are created during the evolution of the situations.

Thus, the system according to the invention allows the plant to be operated beyond the threshold limits, and this involves a better exploitation of the plant in respect of the known plants, as well as a quicker pay-back of the financial investment made with the plant and, above all, the system allows a continuous-cycle operation of the plant to be achieved.

## ILLUSTRATION OF THE DRAWINGS

Other advantages and features of the invention will become apparent from reading the following description, of a form of embodiment of the invention, given as a non-limiting example, with the help of the figures shown in the attached drawings, in which:

- figure 1 shows a simplified flow-sheet of an ultrafiltration process and
- figure 2 shows a simplified diagram of the operation principle of the system according to the present invention.

## DESCRIPTION OF A PREFERRED FORM OF EMBODIMENT

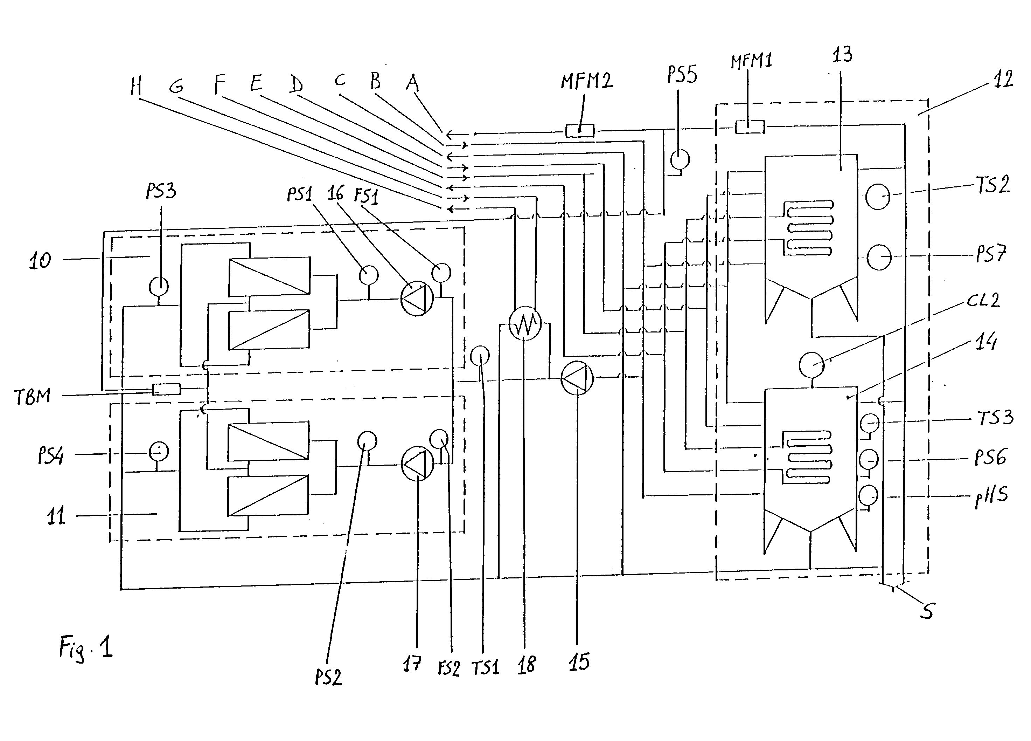

Figure 1 shows a flow-sheet representing an ultrafiltration plant, in particular an ultrafiltration plant usable in the field of the oenological industry.

Said flow-sheet has been simplified in such a way as to facilitate its intelligibility, and is therefore uniquely provided with those elements which are essential for carrying out the ultrafiltration process; however, it does not show all the flow stopping and deviating elements which are normally present in the plant, such as pressure valves, electrovalves, safety valves and similar.

The positioning of these elements does not anyway form a part of the present invention and is easy to be singled out by a designer engineer.

The ultrafiltration plant generally comprises a pair of filtration sections 10, 11, which concern the production phase, and a section 12 for regenerating the membranes and for washing the plant which comprises a membrane regenerating tank 13 and a plant washing tank 14, concerning a recycling phase within the plant, said sections being singled out in the figure by means of dashed lines.

The product to be filtered is inlet in the plant by means of the pipeline indicated by arrow B and follows a path, guided by means of suitable valves, up to a first centrifugal pump 15 which pushes it then towards the filtration sections 10, 11, which are in this case connected in parallel.

Successively, the product is inlet into the filtration sections 10, 11, where the membrane ultrafiltration process takes place, under the action of the pressure exerted by respective centrifugal pumps 16, 17.

In the case representerd in fig. 1 each filtration section includes a pair of filtering elements disposed in parallel to each other.

Close to the outlet of the filtration sections 10, 11 the filtered product flows through a turbidity measuring device TBM which gives informations to a process controlling logics which will be hereinafter described in detail.

After the comparison between the data received from the device TBM an the pre-established ones, the controlling logics autonomously actuates a series of valves which lead the permeated product towards the outlet pipeline A and the concentrated product towards the outlet pipeline C; thereafter, the membrane-regenerating and plant-washing operation is activated, and this operation is actuated starting from the regenerating and washing section 12; this operation provides for the steam-washing of the plant and, respectively, for the regeneration of the membranes by means of suitable chemical reagents which are present within tank 13.

Successively, a new filtration operation is carried out.

According to the invention, the ultrafiltration plant is equipped, in correspondence of predetermined locations of the same, with detectors of parameters of chemical, physical, mechanical, fluids-dynamical and microbiological kind, said detectors being connected to a logics suitable for controlling and optimising the current process.

More particularly, the detectors send istantaneuos data to a microprocessor which works according to a pre-established program and which provides for the comparison of said data with other data, permanently resident in the memory of the computer connected to said microprocessor, and correlated to predetermined threshold values and for the insertion of said istantaneous data in the current operating phase of the plant.

Then, these data are inserted into the computer, which is programmed in such a way as to analyze them, as they are given by the microprocessor, and to intersecate them according to all the mutually possible combinations.

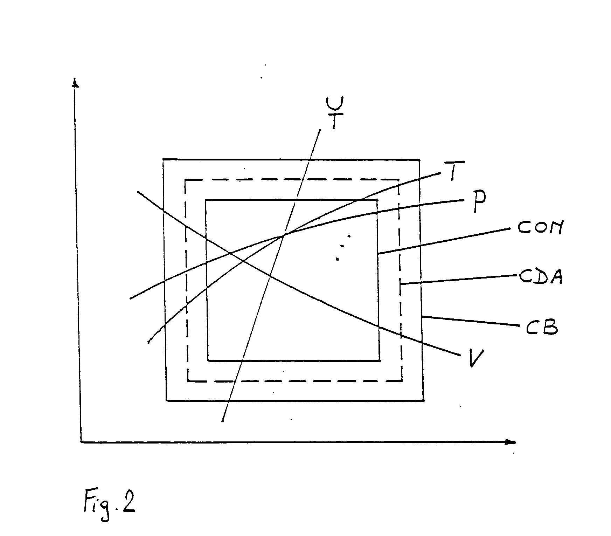

Referring to the simplified diagram shown in fig. 2, the computer analyzes the temporal behaviour of, for instance, flow speed V, temperature T, turbidity ¥, pressure P and, in the case where all these data would fall within a normal operating range CON, it allows the continuation of the current process; on the contrary, in the case where one or more data would fall within an alarm range CDA, the computer supplies, by means of displaying devices, informations about a given intervening failure but it nevertheless allows the process to be still carried out; in the final case where one or more data would overpass a stopping range CB, the computer automatically stops the prosecution of the process, by setting the plant in a condition of highest security in which a low pressure flow is carried out in order to remove the product which had stopped in the moment of the plant arrest.

Specifically referring to the case illustrated in fig. 1, this plant is provided with the following detectors:

- TS1 : operating temperature;
- TS2 : reagents tank temperature;
- TS3 : water tank temperature;
- TBM : turbidity;
- MFM1 : quantity of istantaneous recycle;
- MFM2 : istantaneous quantity of permeated product;
- FS1 : flow speed;
- FS2 : flow speed;
- PS1 : supplying pressure of section 10 modules;
- PS2 : supplying pressure of section 11 modules;
- PS3 : outlet pressure concentrated product;
- PS4 : outlet pressure concentrated product;
- PS5 : outlet pressure permeated product;
- PS6 : water tank pressure;
- PS7 : chemical reagents tank pressure;
- CL2 : free chlorine concentration;
- pHS : tank hydrogenionic concentration.

According to different process requirements, each of the various parameters may be inserted into the computer according to a particular operating range, beyond of whichh the plant is immediately stopped.

In order to define the parameter TS1, the computer will be respectively supplied with a first threshold value corresponding to the highest operating temperature, over which the plant will be stopped, with a second threshold value corresponding to the lowest operating temperature, beneath of which the plant will be as well stopped, and with two respective threshold values for, respectively, activating and desactivating a heat exchanger 18 which serves to keep controlled the process temperature.

Similarly, the parameters TS2 and TS3 are provided with a lower and a higher threshold values, the overcoming of which causes the computer to send out failure signals.

Referring to the highest turbidity detector TBM, the computer intervenes and stops the plant in the case where the threshold value is overcome in a production phase, while it only signalizes the failure during the washing phase.

Similar threshold values, causing different reactions of the computer in respect of the plant, may be set in relation to the other parameters mentioned above.

In order to complete the plant description, we may still note in fig. 1:

- a concentrated product outlet pipe C;
- a water supply pipeline D;
- a steam supply pipeline E;
- a steam outlet pipeline F;
- a cooling liquid inlet pipeline G;
- a cooling liqund outlet H;
- a plant drain pipeline S.

According to the invention, the management in real time of the data relative to the typical parameters of the process, which is carried out by the microprocessor and by the electronic computer connected to it, allows to keep under control and to achieve the best performances of an ultrafiltration plant, in this way assuring a precise execution of the separating process of the chemical species.

Furthermore, in order to guarantee the highest reliability, safety and control of the process execution, the management electronic computer may also be provided with the following ddevices:

- safety memory, which immediately restores the memory in the case of a power supply interruption;
- no-break generating set, in order to guarantee a stabilized power supply for carrying out a given program up to the security condition;
- modem for connecting, by means of a dedicated telephone line, the computer with another computer which is provided in a technical assistance seat or with a central computer, in the case of factories having different working locations;
- cassette recorder, in order to record any variation intervening in the process.

**Claims**

1. Automatic system for controlling and optimising of an ultrafiltration process in foodstuffs and/or chemical and/or chemical/pharmaceutical industrial plants, said process being suitable for carrying out a separation between two chemical species by means of the passage of a predetermined product through one or more porous polymeric membranes belonging to a filtration section of a plant, said plant further comprising a chemical regenerating section and a washing section, the carrying out of said process being controlled by means of physical, chemical, mechanical, fluids-dynamical and microbiological parameters such as, for instance, permeation speed, product turbidity, pressure, rate of flow, chlorine concentration, pH, temperature, characterised in that it comprises a plurality of detectors-transducers suitable for istantaneously transforming detected values of said parameters into electric signals, said signals being fed, during a process phase, to a microprocessor suitable for elaborating said electric signals and for supplying an electronic computer with istantaneous data relating said process phase, in that said computer is suitable for comparing said data with predetermined threshold data which are relative to parameters of the same kind, and for carrying out a combined analysis of the data relative to parameters of a given kind, whose variation exerts an influence on the behaviour of parameters of another kind, with the istantaneous data relative to the latter, and in that said computer is suitable for allowing the prosecution of the process in the case where the result of said combined analysis would fall within a first predetermined range of values, for sending alarm signals to acoustic and/or visual signalling devices in the case where the result of said combined analysis would fall within a second predetermined range of values, and for stopping the process in the case where the result of said combined analysis would consist in a value exceeding said second predetermined range of values.

2. System according to claim 1, characterised in that said computer is provided with communication and/or recording means of said data.

3. System according to one of claims 1 and 2, characterised in that said computer is provided with security means suitable for holding said data in memory, during said process, in the case of a power supply failure of said plant.

4. Ultrafiltration process of chemical species, said process being carried out by means of an automatic plant and comprising the following operating phases:

a) filtration of a predetermined chemical species by means of the passage of the latter through a filtration section comprising at least one porous membrane;

b) regeneration of said at least one membrane by means of treatment with predetermined chemical reagents;

c) steam washing of the pipelines of said plant, characterised in that said process is carried out by means of an automatic system for controlling and optimising of said operating phases according to that described in one of the preceeding claims.

Fig. 1

EP 0 464 321 A1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 708 790 (J.W. BRAY) <br> – – – | | B 01 D 61/22 // <br> C 12 H 1/06 <br> C 12 G 3/08 <br> B 01 D 37/04 |
| A | EP-A-0 121 105 (C.G.E.) <br> – – – | | |
| A | FR-A-2 586 202 (CENTRE MERIDIONAL D'OENOLOGIE) <br> – – – | | |
| A | GB-A-2 181 363 (UKAEA) <br> – – – | | |
| A | US-A-4 381 999 (T.D. BOUCHER) <br> – – – – – | | |

**TECHNICAL FIELDS SEARCHED (Int. Cl.5)**

B 01 D 61/00
B 01 D 37/00
C 12 H 1/00
C 12 G 3/00

The present search report has been drawn up for all claims

| Place of search | Date of completion of search | Examiner |
|---|---|---|
| The Hague | 25 September 91 | DEVISME F.R. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document